# EUROPÄISCHE PATENTANMELDUNG

(11) **EP 1 769 870 A1**
(43) Veröffentlichungstag der Anmeldung: **04.04.2007**
(21) Anmeldenummer: 06017941.3
(22) Anmeldetag: 29.08.2006
(51) Int. Cl.: B23D 37/14, F16H 25/22

(54) **Verfahren zur Herstellung einer Welle oder einer Mutter als Teil eines Kugelgewindetriebs umfassend eine Welle und eine Mutter**

(30) Priorität: 28.09.2005 DE 102005046530
(71) Anmelder: Leistritz Aktiengesellschaft, 90459 Nürnberg (DE)
(72) Erfinder: Theusner, Klaus, 34414 Warburg (DE); Spreter, Ronald, 91161 Hilpoltstein Hofstetten (DE)
(74) Vertreter: Blaumeier, Jörg

(57) **Zusammenfassung**

Verfahren zur Herstellung einer Welle oder einer Mutter als ein Teil eines Kugelgewindetriebs (1) bestehend aus Welle (5) und Mutter (2), wobei an der Welle oder der Mutter wenigstens eine Kugeln (3) führende Nut mit einem Kugelumlenkungsabschnitt (10,11), in der die Kugeln axial und radial zum Vorbeiführen an einem am anderen Teil vorgesehenen Nutensteg geführt werden, vorgesehen ist, wobei die Nut mit dem Kugelumlenkungsabschnitt durch spanabhebendes Wirbeln mittels einer Wirbelvorrichtung hergestellt wird.

## Beschreibung

Die Erfindung betrifft ein Verfahren zur Herstellung einer Welle oder einer Mutter als ein Teil eines Kugelgewindetriebs umfassend eine Welle und eine Mutter, wobei an der Welle oder der Mutter wenigstens eine Kugeln führende Nut mit einem Kugelumlenkungsabschnitt, in dem die Kugeln axial und radial zum Vorbeiführen an einem am anderen Teil vorgesehenen Nutensteg geführt werden, vorgesehen ist.

Ein solcher Kugelgewindetrieb ist beispielsweise aus US 2004/0200303 A1 bekannt. Der dort beschriebene Kugelgewindetrieb besteht im Wesentlichen aus einer Mutter, die mit einem eine gewünschte Steigung aufweisenden Innengewinde versehen ist, sowie einer Welle, die bei der in US 2004/0200303 A1 beschriebenen Ausführungsform zwei parallel laufende Nuten, ebenfalls mit einer entsprechenden Steigung, aufweist, die über einen Kugelumlenkungsabschnitt verfügen. In diesem werden die an einem entsprechenden Kugelführungskäfig gehalterten Kugeln, über die die Mutter bezüglich der Welle gelagert ist, geführt. Im Bereich des Kugelumlenkungsabschnitts wechseln die Kugeln vom Ende des die vorbestimmte Steigung aufweisenden Nutabschnitt zum Anfang desselben. Hierzu weist der Kugelumlenkungsabschnitt eine entsprechende axiale Steigung auf und ist bezüglich der Nutebene bei dem dort beschriebenen Ausführungsbeispiel eingetieft, sodass die über den Kugelumlenkungsabschnitt wechselnden Kugeln dort radial nach innen, also quasi in die Welle hinein und, nachdem sie den gegenüberliegenden, also den Kugelumlenkungsabschnitt übergreifenden Steg des Innengewindes der Mutter passiert haben, wieder herausbewegt und in die "reguläre" Nut eingeführt werden.

Während US 2004/0200303 A1 eine Ausführung beschreibt, bei der die Kugel führende Nut mit dem Kugelumlenkungsabschnitt an der Welle vorgesehen ist, kann die Ausgestaltung natürlich auch umgekehrt sein, das heißt, die eine oder die mehreren separaten kugelführenden Nuten mit den jeweiligen Kugelumlenkungsabschnitten können auch an der Innenseite der Mutter vorgesehen sein, während die Welle mit einem oder mehreren Gewindezügen versehen ist. Bei dieser Ausgestaltung würde eine Kugel im Kugelumlenkungsabschnitt jedoch radial gesehen nach außen in den Mutterkörper und wieder zurückgeführt werden.

Problematisch jedoch ist die Herstellung einer kugelführenden Nut, insbesondere im Bereich des Kugelumlenkungsabschnitts. Üblicherweise werden solche Laufbahnen gefräst und geschliffen, wobei hier üblicherweise ein Scheibenfräser zum Einsatz kommt. Um nun den Kugelumlenkungsabschnitt, der eine andere und auch in eine andere Richtung gerichtete Steigung, verglichen mit der eigentlichen Laufbahn, aufweist, herauszuarbeiten, ist ein Wechsel des Fräswerkzeugs erforderlich, da ein Scheibenfräser hierzu nicht verwendet werden kann, da dieser bei entsprechender Verstellung die eigentliche Nut beschädigen würde. Üblicherweise wird hierzu ein Kugelfräser verwendet. Ist bereits der Werkzeugwechsel umständlich und aufwändig und folglich die Nutherstellung zeitaufwändig, so können auch unter Verwendung eines Kugelfräsers keine homogenen Übergänge der Nut in den Kugelumlenkungsabschnitt und von diesem wiederum in die Nut sowie entsprechende Oberflächengüten erhalten werden, was eine aufwändige Nachbearbeitung erforderlich macht.

Der Erfindung liegt daher das Problem zugrunde, ein Verfahren anzugeben, das eine einfache, schnelle und homogene Nutherstellung einschließlich des Kugelumlenkungsabschnitts ermöglicht.

Zur Lösung dieses Problems ist bei einem Verfahren der eingangs genannten Art erfindungsgemäß vorgesehen, dass die Nut mit dem Kugelumlenkungsabschnitt durch spanabhebendes Wirbeln mittels einer Wirbelvorrichtung hergestellt wird.

Beim spanabhebenden Wirbeln rotiert ein Werkzeug um den zu bearbeitenden Gegenstand im Falle eines Außenwirbelaggregats bzw. im Falle eines Innenwirbelaggregats im Inneren des Werkstücks, also beispielsweise der Mutter. Es ist exzentrisch zur Werkstückachse angeordnet, sodass das jeweilige Wirbelwerkzeug an einer bestimmten Stelle am Werkstück spanabhebend angreift.

Durch das Wirbeln, bei dem von der Geometrie her kleine Werkzeuge mit entsprechend ausgebildeten Werkzeugschneiden verwendet werden, greift also das Werkzeug nur punktuell an. Nachdem eine Wirbelvorrichtung horizontal bewegt sowie um eine vertikal bezüglich der Drehachse der Wirbelvorrichtung stehende Achse verdreht wie auch vertikal längs dieser Achse bewegt werden kann, kann folglich die Steuerung des Wirbelvorgangs derart exakt erfolgen, dass eine Nut einschließlich Kugelumlenkungsabschnitt homogen im Bereich der Übergänge sowie mit hoher Oberflächengüte gewirbelt werden kann. Die Nut wird bevorzugt in einem Zug gewirbelt, wobei zur Erzeugung des Kugelumlenkungsabschnitts die Wirbelvorrichtung um eine Achse senkrecht zur Drehachse der Wirbelvorrichtung verdreht und in einer Achse senkrecht zur Drehachse mit ihrem Arbeitsbereich zur Welle oder der Mutter hin bewegt wird, bei entsprechender horizontaler Linearbewegung der Wirbelvorrichtung. Während zum Wirbeln des eine homogene Steigung aufweisenden Nutabschnitts die Wirbelvorrichtung in ihrer Winkelstellung und Vertikalposition nicht bewegt wird, sondern horizontal gemäß der gewünschten Gewindesteigung bei gleichzeitiger Drehung der Welle bewegt wird, erfolgt eine Verstellung der Wirbelvorrichtung zur Ausbildung des Kugelumlenkungsabschnitts. Da dieser eine steilere Steigung, die in die entgegengesetzte Richtung zur Steigung der Nut läuft, und eine variierende Tiefe aufweist, wird für einen homogenen Übergang der Nut in den Kugelumlenkungsabschnitt die Wirbelvorrichtung um die Vertikalachse in einer homogenen Stellbewegung verschwenkt, bis die erforderliche Winkelstellung der Wirbelvorrichtung zur Ausbildung der gewünschten Steigung des Kugelumlenkungsabschnitts erreicht ist. Parallel dazu wird die Wirbelvorrichtung auch vertikal abgesenkt, um die im Falle der Bearbeitung einer Welle erforderliche Austiefung des Kugelumlenkungsabschnitts zu realisieren. Eine entsprechende Rückstellung in vertikaler wie auch in winkelmäßiger Hinsicht erfolgt, wenn der tiefste Punkt des Kugelumlenkungsabschnitts durchfahren ist und der Übergang in die zu wirbelnde oder bereits gewirbelte Nut auszubilden ist.

Nachdem die Wirbelvorrichtung wie beschrieben nur punktuell angreift und horizontal sowie vertikal bewegt wie auch um eine Vertikalachse verschwenkt werden kann, kann auf diese Weise in einem Zug eine kugelführende Nut einschließlich Kugelumlenkungsabschnitt mit höchst homogenen Übergängen und hoher Oberflächengüte wie äußerster Exaktheit des Nutverlaufs hergestellt werden. Ein Werkzeugwechsel wie im Stand der Technik ist nicht erforderlich, sodass die Herstellung der Nut auch wesentlich schneller von statten gehen kann.

Zweckmäßigerweise weist die Wirbelvorrichtung zwei oder mehr Werkzeuge auf, die um den Umfang der Wirbelvorrichtung versetzt angeordnet sind, wobei der Abstand zwischen zwei Werkzeugen in Abhängigkeit des Außendurchmessers der zu bearbeitenden Welle oder des Innendurchmessers der zu bearbeitenden Mutter sowie der axialen Steigung des Kugelumlenkungsabschnitts gewählt ist. Es können also beispielsweise sechs oder acht umfangmäßig verteilt und äquidistant bezüglich einander beabstandeter Werkzeuge zum Einsatz kommen, wobei der Abstand jedoch in jedem Fall so zu bemessen ist, dass beim Wirbeln zur Bildung des Kugelumlenkungsabschnitts ein nachfolgendes Werkzeug während der Verschwenk- bzw. Absenkbewegung nicht an einem Flankenabschnitt der bereits gewirbelten Nut oder des bereits gewirbelten Kugelumlenkungsabschnitts angreift. Die Werkzeugschneiden sind dabei so ausgebildet, dass sie dem Laufbahnprofil der Nut entsprechen.

Wenngleich bereits in einem einzigen Wirbelvorgang die Nut samt Kugelumlenkungsabschnitt herausgearbeitet werden kann, ist es durchaus denkbar, nach dem ersten Wirbelvorgang einen zweiten Wirbelvorgang zur reinen Oberflächennachbearbeitung durchzuführen. Die ist jedoch optional.

Neben dem erfindungsgemäßen Verfahren betrifft die Erfindung ferner eine Welle oder eine Mutter für einen Kugelgewindetrieb, welche Welle oder Mutter wenigstens eine Kugeln führende Nut mit einem Kugelumlenkungsabschnitt, in dem die Kugeln axial und radial zum Vorbeiführen an einem am anderen Teil vorgesehenen Nutensteg geführt werden, aufweist. Die Welle oder Mutter zeichnet sich erfindungsgemäß dadurch aus, dass die Nut mit dem Kugelumlenkungsabschnitt durch spanabhebendes Wirbeln mittels einer Wirbelvorrichtung hergestellt ist.

Weiterhin betrifft die Erfindung einen Kugelgewindetrieb, umfassend eine derartige Welle oder Mutter.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung einer Explosionsansicht eines erfindungsgemäßen Kugelgewindetriebs,
- Fig. 2: eine Prinzipdarstellung des Verlaufs der Nuttiefe vor, im Bereich und hinter dem Kugelumlenkungsabschnitt,
- Fig. 3: eine Teilschnittansicht zur Darstellung der Kugelumlenkung,
- Fig. 4: eine Prinzipdarstellung des Wirbelverfahrens,
- Fig. 5: eine Prinzipansicht verschiedener Stellungen des Wirbelaggregats währen der Nutherstellung.

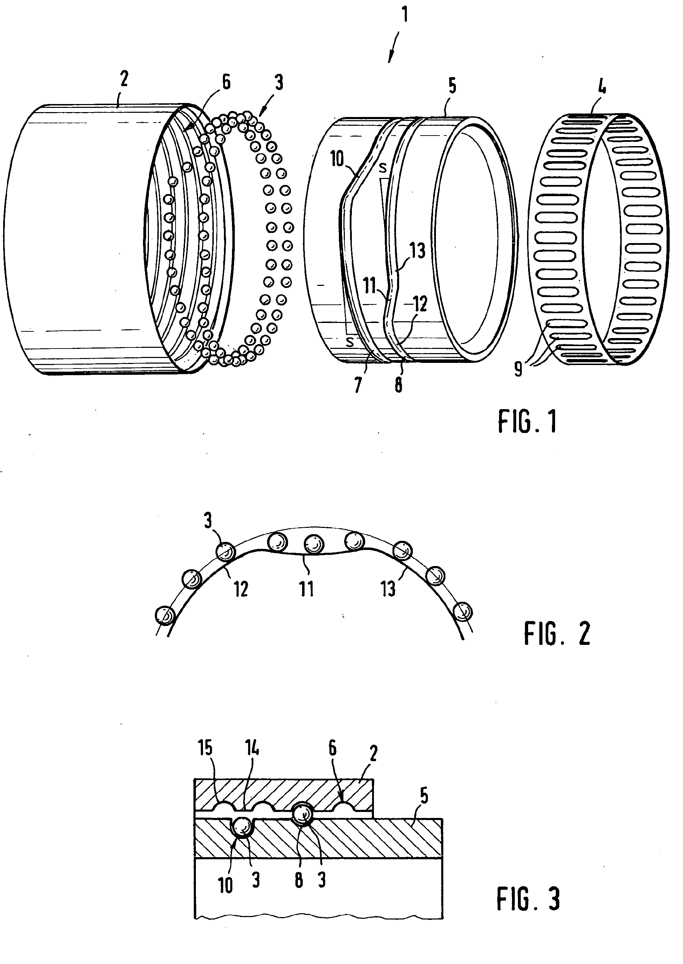

Fig. 1 zeigt einen erfindungsgemäßen Kugelgewindetrieb 1, wobei hier nur die zentralen Elemente dargestellt sind, die für das Verständnis eines solchen Triebs von Nöten sind. Prinzipiell umfasst ein solcher Kugelgewindetrieb eine Mutter 2, mehrere Kugeln 3, die hier in Form zweier Reihen dargestellt sind, zumeist einen Kugelhaltekäfig 4 (alternativ ist auch eine direkte Kugelführung ohne Käfig möglich) sowie eine Welle 5.

Die Mutter 2 weist ein Innengewinde 6 mit vorbestimmter Steigung auf. Über dieses Innengewinde ist die Mutter 2 über die Kugeln 3 an der Welle 5 in zwei dort ausgebildeten Nuten 7, 8 geführt, wobei die Kugeln über den Kugelhalterkäfig 4 in dortigen länglichen Durchbrechungen 9 gehalten sind. Die Durchbrechungen 9 lassen eine axiale Bewegung der Kugeln zu.

Die beiden Nuten 7, 8 - es können im Bedarfsfall auch mehr Nuten vorgesehen sein - weisen eine Steigung s auf, die der Steigung des Innengewindes 6 entspricht. Darüber hinaus weist jede der Nut 7, 8 jeweils einen Kugelumlenkabschnitt 10, 11 auf, an dem sich die Steigung der Nut ändert, und in dem die Kugeln vom einen Ende 12 einer Nut zum anderen Ende 13 der Nut überführt werden können. Die Nuten 7, 8 sind in einem Wirbelverfahren bevorzugt in einem einzigen Wirbelumlauf hergestellt, worauf nachfolgend noch eingegangen wird. Die jeweilige Nut 7, 8 geht homogen und stetig ohne oberflächliche Kanten oder sonstige Inhomogenitäten in den Kugelumlenkabschnitt 10, 11 über, in dem sich die Tiefe der Nut ändert, wie aus Fig. 2 ersichtlich ist.

In dieser ist ein Nutverlauf dargestellt, wobei im gezeigten Beispiel links der Bereich des einen Nutendes 12, daran anschließend der Kugelumlenkabschnitt 11 und daran anschließend das andere Nutende 13 dargestellt sind. Ersichtlich ist der Nutgrund im Bereich des Kugelumlenkungsabschnitts 11 eingetieft, sodass die gezeigten Kugeln aufgrund der Nutsteigung zwar axial, jedoch infolge der Eintiefung auch radial bewegt werden, nämlich zum Welleninneren hin. Am anderen Ende des Kugelumlenkungsabschnitts steigt der Nutgrund wieder auf das übliche Niveau an, das heißt, die Kugeln werden wieder nach oben geführt.

Diese Nutumlenkung lässt einen Wechsel einer Kugel aus dem Eingriff in den Gewindegang 15 an der Mutter in den axial versetzten Eingriff in den Gewindegang 15 zu, wobei während der Wechselbewegung im Kugelumlenkungsabschnitt 11 ein Nutsteg 14 oberhalb der Kugel 3 vorbeigeführt werden kann, bzw. die Kugel 3 unterhalb des Nutstegs 14 taucht, an ihm vorbeigeführt und daneben wieder in den Gewindegang 15 eingeführt wird. Dies ergibt sich beispielsweise aus Fig. 3. Im gezeigten Schnitt ist zum einen die Welle 5, zum anderen exemplarisch die Mutter 2 dargestellt. Gezeigt ist das Innengewinde 6, wobei dieses einen umlaufenden Gewindegang 15 sowie einen entsprechenden umlaufenden Nutensteg 14 aufweist. Die rechts gezeigte Kugel befindet sich in einem die stetige Steigung s aufweisenden Bereich der Nut 8, während sich die links gezeigte Kugel beispielsweise im Kugelumlenkabschnitt 10 befindet. Ersichtlich liegt sie unterhalb und leicht beabstandet vom Nutsteg 14, wird also an diesem vorbei geführt und kann in die benachbarte Gewindegang 15 eingeführt werden.

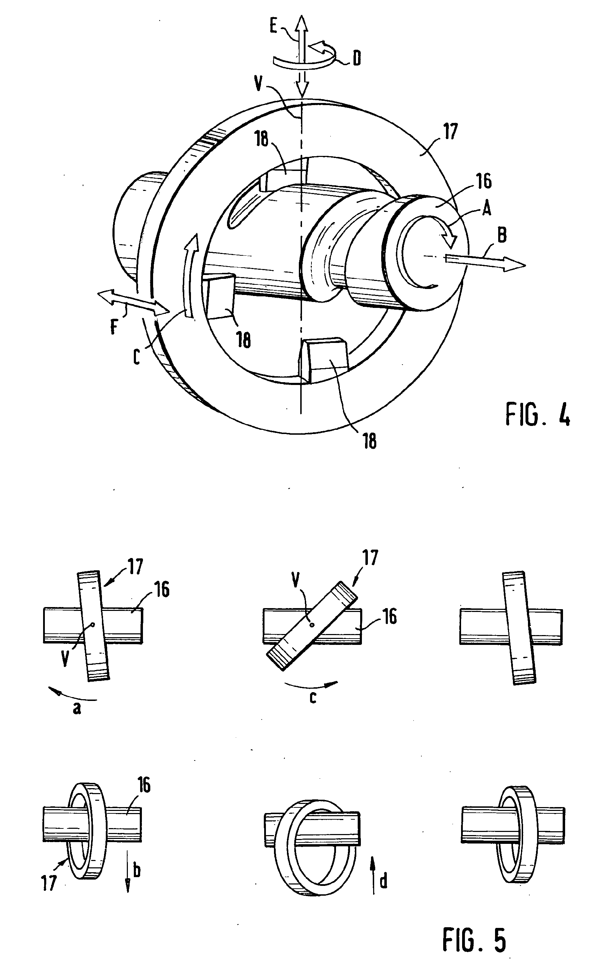

Wie ausgeführt werden die beiden Nuten 7, 8 einschließlich ihrer jeweiligen Kugelumlenkungsabschnitte 10, 11 in einem Wirbelverfahren bevorzugt in einem einzigen Wirbelvorgang herausgearbeitet, sodass sich ein homogener Nutenzug ergibt. Aus Fig. 4 ist das Grundprinzip des Wirbelverfahrens bekannt. Gezeigt ist ein Werkstück 16, hier eine Welle aus Vollmaterial, die um ihre Längsachse drehend gelagert ist, wie durch den Pfeil A dargestellt ist. Entlang der Längsachse ist sie ferner axial bewegbar, wie durch den Pfeil B dargestellt ist.

Gezeigt ist ferner als Prinzipskizze die Wirbelvorrichtung 17 in Form eines Außenwirbelrings, an dessen Innenseite im gezeigten Beispiel vier Werkzeuge 18, von denen drei dargestellt sind, angeordnet sind. Die Wirbelvorrichtung 17 ist exzentrisch zur Längsachse des Werkstücks 16 angeordnet, sie befindet sich mit ihrem oberen Bereich näher zum Werkstück 16 als mit dem unteren. Im oberen Bereich erfolgt der spanende Angriff am Werkstück 16. Die Wirbelvorrichtung rotiert um ihr Zentrum, wie durch den Pfeil C angedeutet ist. Sie ist des Weiteren um eine Vertikalachse V verdrehbar, wie durch den Pfeil D dargestellt ist. Entlang dieser Achse ist sie auch höhenverstellbar, wie durch den Doppelpfeil E angedeutet ist. Schließlich ist sie, wie durch den Doppelpfeil F dargestellt ist, auch horizontal bewegbar.

Zum Wirbeln rotiert wie beschrieben die Wirbelvorrichtung 17, wobei mit jeder Umdrehung die Werkzeuge 18 jeweils einmal in spanenden Angriff am Werkstück 16 gelangen. Parallel dazu rotiert das Werkstück 16 um die Längsachse gemäß Pfeil B, während gleichzeitig die Wirbelvorrichtung horizontal und axial bewegt wird. Die grundsätzlichen Vorgänge beim Wirbeln sind dem Fachmann hinlänglich bekannt, sodass hierauf nicht näher eingegangen werden muss.

Fig. 5 zeigt nun in Form einer Prinzipdarstellung die Stellungen, die die Wirbelvorrichtung 17 bezüglich des Werkstücks 16, im gezeigten Beispiel bezüglich der Welle 5 einnimmt, um eine Nut, wie in Fig. 1 gezeigt, durch Wirbeln zu erzeugen.

Dargestellt ist jeweils in der oberen Figurenreihe eine Aufsicht auf die Wirbelvorrichtung 17 und das Werkstück 16 in Richtung der Vertikalachse V, in der unteren Reihe die dazugehörige Seitenansicht.

Wie im Figurenpaar links dargestellt ist, steht die Wirbelvorrichtung 17 zur Ausbildung der Nut im Bereich der Nutsteigung s annähernd senkrecht zur Längsachse des Werkstücks 16. Diese Stellung wird so lange beibehalten, bis man sich dem Kugelumlenkbereich 10 nähert, der ebenfalls durch Wirbeln herauszuarbeiten ist. Hierzu verschwenkt die Wirbelvorrichtung 17, wie links durch den Pfeil a dargestellt ist, um die Vertikalachse V nach links, ändert also ihre Steigung, während sie nach wie vor rotiert, und während natürlich auch das Werkstück 16 gegebenenfalls rotiert und axial bewegt wird, je nachdem wie die Steuerung konkret ausgelegt ist. Gleichzeitig senkt sich zur Vertiefung der Nut im Kugelumlenkabschnitt die Wirbelvorrichtung 17 ab, wie durch den Pfeil b dargestellt ist. Im mittleren Figurenpaar in Fig. 5 ist die Stellung gezeigt, die die Wirbelvorrichtung 17 beispielsweise in der Mitte des Kugelumlenkabschnitts 10 einnimmt. Ersichtlich steht sie unter einem deutlich anderen Winkel bezüglich des Werkstücks 16 und ist etwas weiter abgesenkt als im zuvor gezeigten Figurenpaar.

Am Ende des Kugelumlenkungsabschnitt 10 wird die Wirbelvorrichtung 17 wieder zurückgestellt, was im mittleren Figurenpaar mit dem Pfeil c angedeutet ist, sie schwenkt also um die Vertikalachse V wieder in die Ausgangsstellung bzw. die Stellung, die zum Wirbeln des die vorbestimmte Steigung s aufweisenden Nutabschnitts benötigt wird, zurück. Gleichzeitig wird die Wirbelvorrichtung 17 auch wieder angehoben, wie durch den Pfeil d dargestellt ist, sodass sich insgesamt wiederum Positionsverhältnisse einstellen, wie sie in Fig. 5 links gezeigt sind. Die Relativstellung der Wirbelvorrichtung 17 zum Werkstück 16 hat sich während dieses Zyklus etwas geändert, nachdem die Nut 7 über den Kugelumlenkabschnitt 10 und unter Berücksichtigung der Steigung eine axiale Bewegung der Wirbelvorrichtung 17 bezüglich des Werkstücks 16 erfordert.

Der Bewegungsbetrieb der Wirbelvorrichtung 17 sowie des Werkstücks 16 relativ zueinander wird über eine übergeordnete Steuerung gesteuert, sodass sich unter Berücksichtigung der Anzahl der an der Wirbelvorrichtung befindlichen Werkzeuge (dies kann eines, können aber auch mehrere sein) die gewünschte Nutform einschließlich der Kugelumlenkung mit homogenen Übergängen und sehr guter Oberflächenbeschaffenheit und stetigem Wandverlauf herausarbeiten lässt. Bei Verwendung mehrerer Werkzeuge sind diese äquidistant an der Wirbelvorrichtung angeordnet, wobei ihr Abstand derart bemessen ist, dass ausgeschlossen ist, dass beim Herausarbeiten des Kugelumlenkabschnitts infolge zu geringen Abstands ein nachfolgendes Werkzeug an einem die gewirbelte Nut begrenzenden Nutsteg angreift und letztlich die Nut zerstört oder beschädigt. Der Abstand ist stets so gewählt, dass dies ausgeschlossen ist, wobei zum einen der Außendurchmesser der zu bearbeitenden Welle oder aber der Innendurchmesser der zu bearbeitenden Mutter sowie die Steigung des Kugelumlenkabschnitts zu berücksichtigen ist, natürlich aber auch die Art und Weise, wie beide Teile, nämlich Wirbelvorrichtung sowie Werkstück relativ zueinander bewegt werden.

Während das beschriebene Ausführungsbeispiel das Wirbeln der Nut an der Außenfläche einer Welle unter Verwendung einer Außenwirbelvorrichtung beschreibt, ist es selbstverständlich auch denkbar, eine solche Nut mit einem Kugelumlenkabschnitt durch eine Innenwirbelvorrichtung an der Innenwand einer Mutter herauszuarbeiten. Hierzu kommt eine Innenwirbelvorrichtung zum Einsatz, bei der das oder die Werkzeuge am Außenumfang verteilt angeordnet sind. Auch diese Innenwirbelvorrichtung ist in entsprechender Weise, wie bezüglich der Außenwirbelvorrichtung in Fig. 4 beschrieben, um die entsprechenden Freiheitsgrade verstellbar. Anders als bei der Ausführung nach Fig. 1 ist bei Ausbildung der Nut an der Innenwand der Mutter der Kugelumlenkabschnitt radial nach außen eingetieft, das heißt, die Kugeln werden während der Bewegung durch den Kugelumlenkabschnitt einerseits axial, andererseits auch radial nach außen über den gegenüberliegenden Gewindesteg des dann an der Welle ausgebildeten Außengewindes geführt.

## Patentansprüche

1. Verfahren zur Herstellung einer Welle oder einer Mutter als ein Teil eines Kugelgewindetriebs bestehend aus Welle und Mutter, wobei an der Welle oder der Mutter wenigstens eine Kugeln führende Nut mit einem Kugelumlenkungsabschnitt, in der die Kugeln axial und radial zum Vorbeiführen an einem am anderen Teil vorgesehenen Nutensteg geführt werden, vorgesehen ist, **dadurch gekennzeichnet, dass** die Nut mit dem Kugelumlenkungsabschnitt durch spanabhebendes Wirbeln mittels einer Wirbelvorrichtung hergestellt wird.

2. Verfahren nach Anspruch 1, **dadurch gekennzeichnet, dass** die Nut in einem Zug gewirbelt wird, wobei zur Erzeugung des Kugelumlenkungsabschnitts die Wirbelvorrichtung um eine Achse senkrecht zur Drehachse der Wirbelvorrichtung verdreht und in einer Achse senkrecht zur Drehachse mit ihrem Arbeitsbereich zur Welle oder der Mutter hin bewegt wird.

3. Verfahren nach Anspruch 1 oder 2, **dadurch gekennzeichnet, dass** eine Wirbelvorrichtung mit zwei oder mehr Werkzeuge verwendet wird, die um den Umfang der Wirbelvorrichtung versetzt angeordnet sind, wobei der Abstand zwischen zwei Werkzeugen in Abhängigkeit des Außendurchmessers der zu bearbeitenden Welle oder des Innendurchmessers der zu bearbeitenden Mutter sowie der axialen Steigung des Kugelumlenkungabschnitts gewählt ist.

4. Verfahren nach einem der vorangehenden Ansprüche, **dadurch gekennzeichnet, dass** nach dem ersten Wirbelvorgang ein zweiter zur Oberflächennachbearbeitung durchgeführt wird.

5. Welle oder Mutter für einen Kugelgewindetrieb, mit wenigstens einer Kugeln (3) führende Nut (7, 8) mit einem Kugelumlenkungsabschnitt (10, 11), in dem die Kugeln (3) axial und radial zum Vorbeiführen an einem am anderen Teil vorgesehenen Nutensteg (14) geführt werden, aufweist, **dadurch gekennzeichnet, dass** die Nut (7, 8) mit dem Kugelumlenkungsabschnitt (10, 11) durch spanabhebendes Wirbeln mittels einer Wirbelvorrichtung (17) hergestellt ist

6. Kugelgewindetrieb, umfassend eine Welle oder eine Mutter nach Anspruch 5.
